# NEUE EUROPÄISCHE PATENTSCHRIFT

(11) **EP 3 034 347 B2**
(45) Veröffentlichungstag und Bekanntmachung des Hinweises auf die Entscheidung über den Einspruch: **18.01.2023**
(45) Hinweis auf die Patenterteilung: 10.05.2017
(21) Anmeldenummer: 15199708.7
(22) Anmeldetag: 14.12.2015
(51) Int. Cl.: B60K 15/063, E02F 9/08, E02D 3/026, E01C 19/28

(54) **BODENBEARBEITUNGSMASCHINE, INSBESONDERE BODENVERDICHTER**
SOIL PROCESSING MACHINE, IN PARTICULAR SOIL COMPACTOR
MACHINE DE TRAITEMENT DE SOL, NOTAMMENT ROULEAU COMPRESSEUR

(30) Priorität: 18.12.2014 DE 102014118995
(43) Veröffentlichungstag der Anmeldung: 22.06.2016
(73) Patentinhaber: Hamm AG, 95643 Tirschenreuth (DE)
(72) Erfinder: Bletscher, Thomas, 92699 Bechtsried (DE); Koestler, Gerd, 95643 Tirschenreuth (DE); Fischer, Martin, 95671 Bärnau (DE); Zimmerer, Michael, 95505 Immenreuth (DE); Bauer, Thomas, 95505 Immenreuth (DE)
(74) Vertreter: Ruttensperger Lachnit Trossin Gomoll

(56) Entgegenhaltungen:
- EP-A1- 2 431 536
- EP-A1- 2 479 393
- EP-A2- 1 736 350
- DE-B3-102012 112 666
- US-A1- 2014 290 224
- Eidesstattliche Versicherung von Herrn Matthias Wolfram
- Wartungsanleitung Walzenzug Hamm 3412 P/HT/HT P
- Gebrauchtmaschinenanzeige Walzenzug Hamm 3412, Baujahr 2013, auf machinerypark.com

## Beschreibung

Die vorliegende Erfindung betrifft eine Bodenbearbeitungsmaschine, insbesondere einen Bodenverdichter, der zur Durchführung von Bodenbearbeitungsvorgängen, wie z.B. zum Verdichten von Asphaltmaterial, Schottermaterial oder Erdreich eingesetzt werden kann.

Ein derartiger Bodenverdichter ist im Allgemeinen mit einem Hinterwagen aufgebaut, an dem beidseits einer Brennkraftmaschine jeweils wenigstens ein Antriebsrad vorgesehen ist. An einem bezüglich des Hinterwagens schwenkbaren Vorderwagen ist eine Bodenbearbeitungswalze, beispielsweise Verdichterwalze, um eine Walzen-drehachse drehbar, welche sich im Wesentlichen in einer Maschinenquerrichtung erstreckt.

Um die immer strenger werdenden Anforderungen hinsichtlich des Schadstoffausstoßes erfüllen zu können, wird bei derartigen Maschinen den aus der Brennkraftmaschine derselben, im Allgemeinen einem Dieselaggregat, ausgestoßenen Abgasen ein Zusatzstoff beigemengt, beispielsweise Harnstoff. In einer im Abgasströmungsweg vorgesehenen Katalysatoranordnung können dann unter Umsetzung des Zusatzstoffes chemische Reaktionen ablaufen, welche zu einem verminderten Stickoxidausstoß führen.

Aus der EP 2 754 870 A1 ist eine kettengetriebene Baumaschine bekannt, welche eine Diesel-Brennkraftmaschine als Antriebsaggregat aufweist. Im Bereich dieser Brennkraftmaschine ist ein Zusatzstofftank angeordnet. Um diesen nahe der Brennkraftmaschine positionierten Zusatzstofftank bzw. den darin enthaltenen Zusatzstoff vor Überhitzung und einer dadurch induzierten Zersetzung zu schützen, können verschiedene Maßnahmen zur Kühlung bzw. zum Vermeiden einer übermäßigen Erwärmung des Zusatzstoffs ergriffen werden. Beispielsweise kann der Zusatzstofftank in ein Isoliergehäuse eingebettet werden. Auch die Umströmung des Zusatzstofftanks mit Kühlmedium ist möglich.

Die gattungsgemässe US 2014/0290224 A1 offenbart eine als Radlader ausgebildete Bodenbearbeitungsmaschine gemäß dem Oberbegriff des Anspruchs 1. Bei dieser bekannten Bodenbearbeitungsmaschine ist ein Zusatzstofftank in der Maschinenlängsrichtung unmittelbar folgend auf ein Hinterrad der Bodenbearbeitungsmaschine und in der Maschinenquerrichtung im Wesentlichen neben diesem Hinterrad angeordnet. Eine Einfüllöffnung des Zusatzstoffstanks liegt an derjenigen Seite der Bodenbearbeitungsmaschine, an welcher auch dieses Hinterrad vorgesehen.

Die EP 2 431 536 A1 offenbart eine als Bagger ausgebildete Bodenbearbeitungsmaschine. Auf einem mit Kettenfahrwerken ausgebildeten Unterwagen ist ein einen Baggerarm, ein Antriebsaggregat und eine Führerkabine tragender Oberwagen um eine im Wesentlichen horizontale Achse drehbar getragen an einem Seitenrandbereich des Oberwagens ist ein Zusatzstofftank mit einer nach oben frei liegenden Einfüllöffnung angeordnet.

Es ist die Aufgabe der vorliegenden Erfindung, eine Bodenbearbeitungsmaschine, insbesondere einen Bodenverdichter, vorzusehen, welche bei optimierter Bauraumausnutzung eine eine übermäßige Erwärmung vermeidende Positionierung eines Zusatzstofftanks ermöglicht.

Erfindungsgemäß wird diese Aufgabe gelöst durch eine Bodenbearbeitungsmaschine, insbesondere Bodenverdichter, gemäss den Merkmalen des Anspruchs 1 umfassend:
- einen Hinterwagen mit einer Brennkraftmaschine,
- beidseits der Brennkraftmaschine jeweils wenigstens eine Antriebsrad,
- eine in einer Maschinenlängsrichtung bezüglich der Brennkraftmaschine versetzt angeordnete Fahrerkabine,
- einen Kraftstofftank für der Brennkraftmaschine zuzuführenden Kraftstoff,
- einen Zusatzstofftank,
- einen Hydraulikflüssigkeitstank.

Bei einer derart aufgebauten Bodenbearbeitungsmaschine ist erfindungsgemäß weiter vorgesehen, dass der Zusatzstofftank in der Maschinenlängsrichtung auf ein Antriebsrad folgend und in einer Maschinenquerrichtung im Wesentlichen neben dem Antriebsrad angeordnet ist.

Bei derartiger Positionierung des Zusatzstofftanks ist dieser vergleichsweise weit weg von der Brennkraftmaschine positioniert und zumindest bereichsweise durch das Antriebsrad bezüglich der Brennkraftmaschine gegen Wärmeübertrag geschützt. Ferner liegt der Zusatzstofftank bei derartiger Positionierung in einem Bereich, der im Wesentlichen seitlich am Hinterwagen ist und somit insbesondere zum Befüllen des Zusatzstofftanks leicht zugänglich ist.

Erfindungsgemäß ist eine Positionierung vorgesehen, bei welcher eine Einfüllöffnung des Zusatzstofftanks und eine Einfüllöffnung des Kraftstofftanks und eine Einfüllöffnung des Hydraulikflüssigkeitstanks an der selben Seite des Hinterwagens angeordnet sind. Somit sind die Einfüllöffnungen des Kraftstofftanks und des Zusatzstofftanks an der gleichen Seite des Hinterwagens gut zugänglich.

Dabei kann beispielsweise vorgesehen sein, dass der Zusatzstofftank in der Maschinenlängsrichtung unmittelbar auf das Antriebsrad folgend angeordnet ist. Somit wird eine kompakte Bauart erhalten, bei welcher jedoch nicht ausgeschlossen ist, dass ein das Antriebsrad abdeckendes Schutzblech oder dgl. zwischen dem Antriebsrad und dem Zusatzstofftank liegt. Es liegt in diesem Bereich jedoch erfindungsgemäß kein weiterer Tank

Da erfindungsgemäß der Zusatzstofftank in der Maschinenlängsrichtung zwischen dem Antriebsrad und dem Hydraulikflüssigkeitstank angeordnet ist, wird eine kompakte Bauart bei ebenfalls leichter Zugänglichkeit des Hydraulikflüssigkeitstanks zum Nachfüllen von Hydraulikflüssigkeit ermöglicht.

Der Zusatzstofftank und der Hydraulikflüssigkeitstank können dabei in der Maschinenquerrichtung im Wesentlichen nebeneinanderliegend angeordnet sein, was die leichte Zugänglichkeit dieser beiden Tanks an der gleichen Seite des Hinterwagens ermöglicht.

Eine effiziente Bauraumausnutzung kann bei einer Weiterbildung der Bodenbearbeitungsmaschine dadurch erreicht werden, dass der Zusatzstofftank oder/und der Hydraulikflüssigkeitstank wenigstens bereichsweise unter der Fahrerkabine angeordnet ist.

Der Kraftstofftank kann in der Maschinenlängsrichtung auf die Brennkraftmaschine folgend und in der Maschinenquerrichtung in einem zentralen Bereich des Hinterwagens angeordnet sein. Dabei können der Zusatzstofftank und der Kraftstofftank sich in der Maschinenlängsrichtung wenigstens teilweise überlappend angeordnet sein.

Insbesondere bei derartiger nahe beieinander liegender Positionierung des Zusatzstofftanks und des Kraftstofftanks kann weiter vorgesehen sein, dass ein Kraftstoffeinfüllstutzen des Kraftstofftanks sich wenigstens bereichsweise zwischen dem Zusatzstofftank und dem Antriebsrad erstreckt. Infolge dessen kann eine Positionierung erreicht werden, bei welcher eine Einfüllöffnung des Zusatzstofftanks und eine Einfüllöffnung des Kraftstofftanks oder/und eine Einfüllöffnung des Hydraulikflüssigkeitstanks in der Maschinenlängsrichtung im Wesentlichen aufeinander folgend angeordnet sind.

Insbesondere beim Aufbau der Bodenbearbeitungsmaschine als Bodenverdichter kann ein Vorderwagen mit dem Hinterwagen schwenkbar verbunden sein, wobei am Vorderwagen eine Bodenbearbeitungswalze um eine im Wesentlichen in der Maschinenquerrichtung sich erstreckende Walzendrehachse drehbar ist.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgeführten Bodenbearbeitungsmaschine;
- Fig. 2: eine Seitenansicht eines Hinterwagens;
- Fig. 3: eine Frontansicht des Hinterwagens;
- Fig. 4: eine Draufsicht auf den Hinterwagen;
- Fig. 5: eine Prinzipdarstellung, welche die Relativlage verschiedener Systembereiche am Hinterwagen zeigt.

Die als Bodenverdichter ausgeführte Bodenbearbeitungsmaschine 10 umfasst einen Vorderwagen 12 und einen mit diesem schwenkbar verbundenen Hinterwagen 14. Am Vorderwagen 12 ist eine Bodenbearbeitungswalze 16 zum Bearbeiten, beispielsweise Verdichten eines Bodens 18 um eine Walzendrehachse drehbar getragen. Am Hinterwagen 14 sind Antriebsräder 20 und eine Fahrerkabine 22 vorgesehen. Die Antriebsräder 20 sind beidseits einer nachfolgend noch beschriebenen Brennkraftmaschine eines Antriebssystems 24 angeordnet.

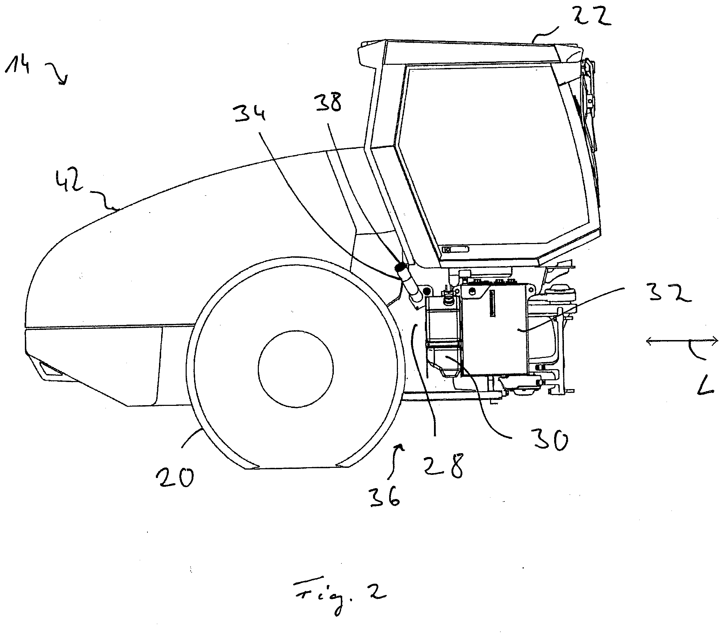

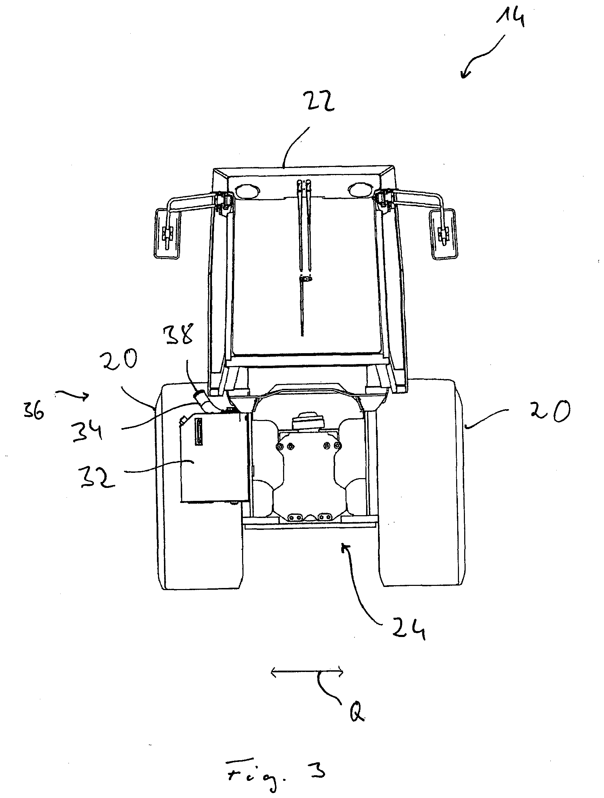

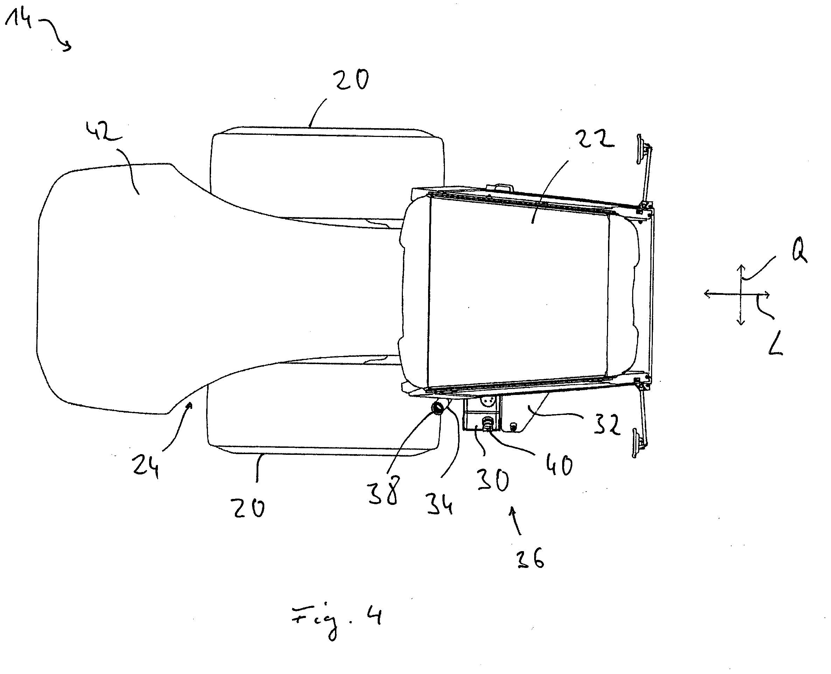

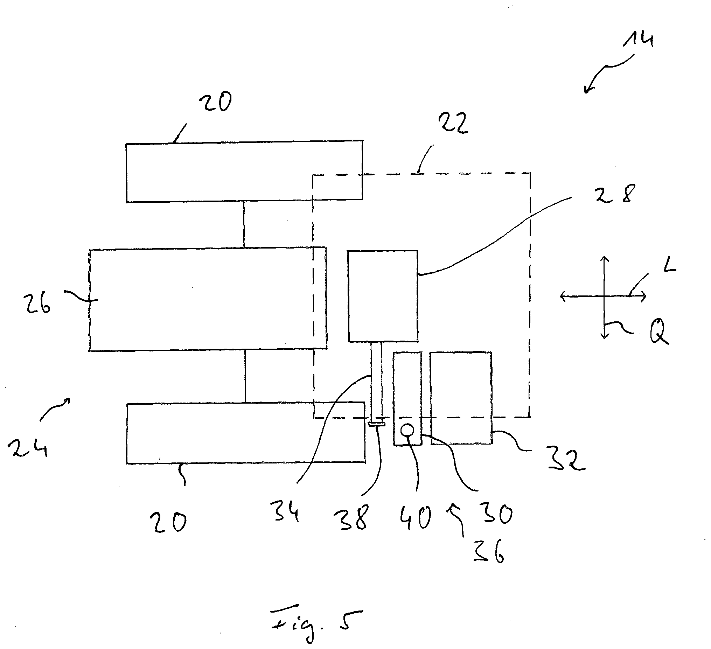

Die Fig. 2 bis 5 zeigen die Relativpositionierung verschiedener Systembereiche am Hinterwagen 14 bezogen auf eine Maschinenlängsrichtung L und eine Maschinenquerrichtung Q. So zeigt die Fig.5 beispielsweise die in der Maschinenquerrichtung Q im Wesentlichen in einem zentralen Bereich angeordnete Brennkraftmaschine 26 des Antriebssystems 24. Die Brennkraftmaschine 26 liefert die für den Betrieb der Bodenbearbeitungsmaschine 10 erforderliche Energie. Diese kann entweder unter Einsatz einer Generatoranordnung in einem Energiespeicher gespeichert werden, aus welchem dann elektrisch zu betreibende Motoren beispielsweise für den Fahrantrieb, einen Unwuchtantrieb oder dergleichen gespeist werden. Auch kann ein Hydrauliksystem durch die Brennkraftmaschine 26 betrieben werden, um Hydraulikmotoren, beispielsweise für den Fahrantrieb oder zum Betreiben verschiedener Aggregate der Bodenbearbeitungsmaschine 10, zu speisen.

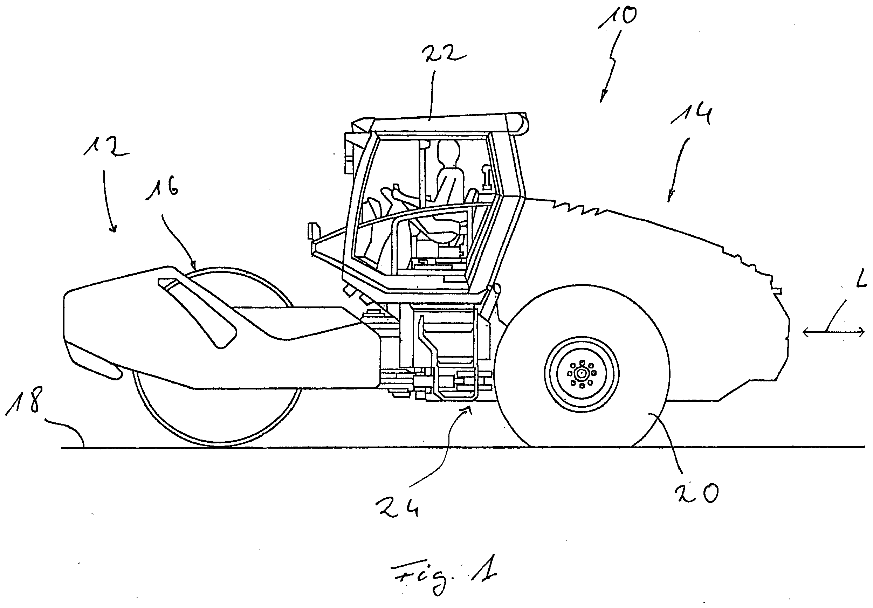

In der Maschinenlängsrichtung L liegen beidseits der in einem zentralen Bereich in der Maschinenquerrichtung Q angeordneten Brennkraftmaschine 26 die Antriebsräder 20. In Fig. 5 mit Strichlinie veranschaulicht ist die Fahrerkabine 22, die in der Maschinenlängsrichtung L bezüglich der Brennkraftmaschine 26 versetzt liegt, sich mit dieser aber zumindest teilweise überlappen kann. Bezogen auf eine im normalen Fahrbetrieb als Vorwärtsfahrtrichtung zu betrachtende Richtung, welche in Fig. 1 eine Bewegungsrichtung nach links ist, liegt die Fahrerkabine 22 im Wesentlichen vor der Brennkraftmaschine 26 bzw. zwischen der Brennkraftmaschine 26 und der Bodenbearbeitungswalze 16.

Ebenfalls in einem zentralen Bereich in der Maschinenquerrichtung Q und in der Maschinenlängsrichtung L auf die Brennkraftmaschine 26 folgend liegt ein Kraftstofftank 28 für den Kraftstoff, also beispielsweise Dieselkraftstoff, welcher der Brennkraftmaschine 26 zuzuführen ist. Die Brennkraftmaschine 26 und der Kraftstofftank 28 liegen somit in der Maschinenlängsrichtung L aufeinander folgend. Der Kraftstofftank 28 ist im Wesentlichen zentral und unter der Fahrerkabine 22 positioniert.

In der Maschinenlängsrichtung L auf das in Fig. 5 unten und bezogen auf eine normale Vorwärtsfahrtrichtung rechts positionierte Antriebsrad 20 folgend ist ein Zusatzstofftank 30 angeordnet. Dieser liegt in der Maschinenquerrichtung Q bezüglich eines zentralen Bereichs nach außen versetzt und überlappt sich somit in der Maschinenquerrichtung Q mit dem neben dem Zusatzstofftank 30 positionierten Antriebsrad 20. Hier ist der Zusatzstofftank 30 unmittelbar auf das Antriebsrad 20 folgend angeordnet. Es liegt kein weiterer Tank zwischen diesen. Dabei ist die Positionierung des Zusatzstofftanks 30 bezüglich des Kraftstofftanks 28 so, dass in der Maschinenquerrichtung Q der Zusatzstofftank 30 ausgehend vom zentralen Bereich auf den Kraftstofftank 28 folgt und in der Maschinenlängsrichtung L der Zusatzstofftank 30 sich mit dem Kraftstofftank 28 überlappt, im Wesentlichen neben diesem angeordnet ist.

In der Maschinenlängsrichtung L auf den Zusatzstofftank folgend ist ein Hydraulikflüssigkeitstank 32 vorgesehen. Dieser liegt in der Maschinenquerrichtung Q im Wesentlichen neben dem Zusatzstofftank 30 und überlappt sich mit diesem im Wesentlichen, so dass der Zusatzstofftank 30 in der Maschinenlängsrichtung L im Wesentlichen zwischen dem Antriebsrad 20 und dem Hydraulikflüssigkeitstank 32 liegt.

Ein Kraftstoffeinfüllstutzen 34 des Kraftstofftanks 28 ist so positioniert, dass er sich ausgehend von dem in der Maschinenquerrichtung Q im Wesentlichen zentral positionierten Kraftstofftank 28 zu derjenigen Seite 36 des Hinterwagens 14 erstreckt, an welcher auch der Zusatzstofftank 30 und der Hydraulikflüssigkeitstank 32 positioniert sind. Der Kraftstoffeinfüllstutzen 34 liegt somit im Wesentlichen zwischen dem Zusatzstofftank 30 und dem Antriebsrad 20 und kann, wie die Fig. 2 dies verdeutlicht, in der Maschinenlängsrichtung L sich bereichsweise mit dem Antriebsrad 20 überlappen. Mit dieser Positionierung des Kraftstoffeinfüllstutzens 34 wird eine Anordnung geschaffen, bei welcher eine an diesem Kraftstoffeinfüllstutzen 34 vorgesehene Kraftstoffeinfüllöffnung 38 in der Maschinenquerrichtung Q im Wesentlichen neben einer Zusatzstoffeinfüllöffnung 40 des Zusatzstofftanks 30 bzw. nahe derselben positioniert ist. Die Kraftstoffeinfüllöffnung 38 und die Zusatzstoffeinfüllöffnung 40 liegen somit an der gleichen Seite 36 des Hinterwagens 14 und sind zum Einfüllen der jeweiligen flüssigen Stoffe gut zugänglich. Auch eine Einfüllöffnung des Hydraulikflüssigkeitstanks 32 kann an dieser Seite 36 und in der Maschinenlängsrichtung L auf die anderen Einfüllöffnungen folgend angeordnet sein.

Die Fig. 2 bis 5 zeigen weiter, dass nicht nur der zentral positionierte Kraftstofftank 28 im Wesentlichen unter der Fahrerkabine 22 liegt, sondern dass die Fahrerkabine 22 in der Maschinenlängsrichtung L und auch der Maschinenquerrichtung Q den Zusatzstofftank 30 und auch den Hydraulikflüssigkeitstank 32 im Wesentlichen überlappt. Somit wird durch die Positionierung des Zusatzstofftanks 30 und des Hydraulikflüssigkeitstanks 32 in einem Bereich unter und sich überlappend mit der Fahrerkabine 22 der dort vorhandene Bauraum effizient genutzt. Gleichzeitig wird durch die Fahrerkabine 22 und auch das Antriebsrad 20 ein Schutz für den Zusatzstofftank 30 und den Hydraulikflüssigkeitstank 32 gegen Einwirkung von oben bzw. von hinten erreicht. Um diese Tanks, insbesondere den Zusatzstofftank, vor äußeren Einflüssen, beispielsweise auch vor übermäßiger Sonneneinstrahlung und damit übermäßiger Erwärmung schützen zu können, kann weiter eine in den Figuren nicht dargestellte Abdeckung vorgesehen sein, welche den Zusatzstofftank 30, ggf. auch den Hydraulikflüssigkeitstank 32, kastenartig überdeckt und beispielsweise im Bereich jeweiliger Einfüllöffnungen eine Aussparung aufweisen kann oder bereichsweise oder vollständig abnehmbar sein kann.

Durch die in den Figuren dargestellte Relativpositionierung der verschiedenen Tanks bezüglich des Antriebsaggregats 26, bezüglich der Fahrerkabine 22 und auch bezüglich eines der Antriebsräder 20 wird bei kompakter Ausgestaltung und effizienter Bauraumausnutzung einerseits eine leichte Zugänglichkeit der verschiedenen Tanks zum Befüllen, ggf. auch zum Überprüfen der Füllstände, gewährleistet. Gleichzeitig ist durch das Umgeben insbesondere des Zusatzstofftanks 30 und des Hydraulikflüssigkeitsktanks 32 mit anderen Systemkomponenten des Hinterwagens eines Schutzwirkung vorgesehen. Der Zusatzstofftank 30 liegt, teilweise auch abgeschirmt durch den Kraftstofftank 28 und das Antriebsrad 20, zwar vergleichsweise nahe an der Brennkraftmaschine 26, ist bezüglich dieser jedoch thermisch gut abgeschirmt. Dies ermöglicht auch einen vergleichsweise kurzen Strömungsweg für den Zusatzstoff zwischen dem Zusatzstofftank 30 und einem von der Brennkraftmaschine 26 beispielsweise in einem Bereich hinter der Fahrerkabine 22 nach außen führenden Abgasleitungssystem.

Da die Einfüllöffnungen für den Kraftstofftank 28 und auch den Zusatzstofftank 30 in einem Bereich liegen, welche im Allgemeinen durch eine Abdeckhaube 42 für die Brennkraftmaschine 26 nicht überdeckt ist, ist es zum Befüllen dieser Tanks auch nicht erforderlich, diese Abdeckhaube 42 zu bewegen.

## Patentansprüche

1. Bodenbearbeitungsmaschine, insbesondere Bodenverdichter, umfassend:
- einen Hinterwagen (14) mit einer Brennkraftmaschine (26),
- beidseits der Brennkraftmaschine (26) jeweils wenigstens ein Antriebsrad (20),
- eine in einer Maschinenlängsrichtung (L) bezüglich der Brennkraftmaschine (26) versetzt angeordnete Fahrerkabine (22),
- einen Kraftstofftank (28) für der Brennkraftmaschine (26) zuzuführenden Kraftstoff,
- einen Zusatzstofftank (30),
- einen Hydraulikflüssigkeitstank (32),
wobei der Zusatzstofftank (30) in der Maschinenlängsrichtung (L) auf ein Antriebsrad (20) folgend und in einer Maschinenquerrichtung (Q) im Wesentlichen neben dem Antriebsrad (20) angeordnet ist,
**dadurch gekennzeichnet,**
**dass** der Zusatzstofftank (30) in der Maschinenlängsrichtung (L) zwischen dem Antriebsrad (20) und dem Hydraulikflüssigkeitstank (32) angeordnet ist, und
**dass** eine Einfüllöffnung (40) des Zusatzstofftanks (30) und eine Einfüllöffnung (38) des Kraftstofftanks (28) und eine Einfüllöffnung des Hydraulikflüssigkeitstanks (32) an der selben Seite (36) des Hinterwagens (14) angeordnet sind.

2. Bodenbearbeitungsmaschine nach Anspruch 1, **dadurch gekennzeichnet, dass** der Zusatzstofftank (30) in der Maschinenlängsrichtung (L) unmittelbar auf das Antriebsrad (20) folgend angeordnet ist.

3. Bodenbearbeitungsmaschine nach Anspruch 1 oder 2, **dadurch gekennzeichnet, dass** der Zusatzstofftank (30) und der Hydraulikflüssigkeitstank in der Maschinenquerrichtung (Q) im Wesentlichen nebeneinander liegend angeordnet sind.

4. Bodenbearbeitungsmaschine nach einem der Ansprüche 1 bis 3, **dadurch gekennzeichnet, dass** der Zusatzstofftank (30) oder/und der Hydraulikflüssigkeitstank (32) wenigstens bereichsweise unter der Fahrerkabine (22) angeordnet ist.

5. Bodenbearbeitungsmaschine nach einem der Ansprüche 1 bis 4, **dadurch gekennzeichnet, dass** der Kraftstofftank (28) in der Maschinenlängsrichtung (L) auf die Brennkraftmaschine (26) folgend und in der Maschinenquerrichtung (Q) in einem zentralen Bereich des Hinterwagens (14) angeordnet ist.

6. Bodenbearbeitungsmaschine nach einem der Ansprüche 1 bis 5, **dadurch gekennzeichnet, dass** der Zusatzstofftank (30) und der Kraftstofftank (28) sich in der Maschinenlängsrichtung (L) wenigstens teilweise überlappend angeordnet sind.

7. Bodenbearbeitungsmaschine nach einem der Ansprüche 1 bis 5, **dadurch gekennzeichnet, dass** ein Kraftstoffeinfüllstutzen (34) des Kraftstofftanks (28) sich wenigstens bereichsweise zwischen dem Zusatzstofftank (30) und dem Antriebsrad (20) erstreckt.

8. Bodenbearbeitungsmaschine nach einem der Ansprüche 1 bis 7, **dadurch gekennzeichnet, dass** eine Einfüllöffnung (40) des Zusatzstofftanks (30) und eine Einfüllöffnung (38) des Kraftstofftanks (28) oder/und eine Einfüllöffnung des Hydraulikflüssigkeitstanks (32) in der Maschinenlängsrichtung (L) im Wesentlichen aufeinanderfolgend angeordnet sind.

9. Bodenbearbeitungsmaschine nach einem der Ansprüche 1 bis 8, **dadurch gekennzeichnet, dass** ein Vorderwagen (12) mit dem Hinterwagen (14) schwenkbar verbunden ist, wobei am Vorderwagen (12) eine Bodenbearbeitungswalze (16) um eine im Wesentlichen in Maschinenquerrichtung (Q) sich erstreckende Walzendrehachse drehbar ist.

## Claims

1. A soil processing machine, in particular a soil compactor, comprising:
- a rear vehicle part (14) with a combustion engine (26),
- on both sides of the combustion engine (26) at least one drive wheel each (20),
- a driver's cab arranged offset in relation to the combustion engine (26) in a longitudinal machine direction (L),
- a fuel tank (28) for fuel to be supplied to the combustion engine (26),
- an additional material tank (30),
- a hydraulic fluid tank (32),
wherein the additional material tank (30) is arranged following a drive wheel (20) in the longitudinal machine direction (L) and substantially next to the drive wheel (20) in a transverse machine direction (Q),
**characterized in that** the additional material tank (30) is arranged between the drive wheel (20) and the hydraulic fluid tank (32) in the longitudinal machine direction (L), and that a filling hole (40) of the additional material tank (30) and a filling hole (38) of the fuel tank (28) and a filling hole of the hydraulic fluid tank (32) are arranged at the same side (36) of the rear vehicle part (14).

2. Soil processing machine according to claim 1,
**characterized in that** the additional material tank (30) is arranged directly following the drive wheel (20) in the longitudinal machine direction (L).

3. Soil processing machine according to one of claims 1 tor 2,
**characterized in that** the additional material tank (30) and the hydraulic fluid tank (32) are arranged substantially next to each other in the transverse machine direction (Q).

4. Soil processing machine according to one of claims 1 to 3,
**characterized in that** the additional material tank (30) or/and the hydraulic fluid tank are at least partially arranged beneath the driver's cab (22).

5. Soil processing machine according to one of claims 1 to 4,
**characterized in that** the fuel tank (28) is arranged following the combustion engine (26) in the longitudinal machine direction (L) and in a central area of the rear vehicle part (14) in the transverse machine direction (Q).

6. Soil processing machine according to one of claims 1 to 5,
**characterized in that** the additional material tank (30) and the fuel tank (28) are arranged at least partially overlapping in the longitudinal machine direction (L).

7. Soil processing machine according to one of claims 1 to 6,
**characterized in that** a fuel filler neck (34) of the fuel tank (28) extends at least partially between the additional material tank (30) and the drive wheel (20).

8. Soil processing machine according to one of claims 1 to 7,
**characterized in that** a filler hole (40) of the additional material tank (30) and a filler hole (38) of the fuel tank (28) or/and a filler hole of the hydraulic fluid tank (32) are arranged substantially following each other in the longitudinal machine direction (L).

9. Soil processing machine according to one of claims 1 to 8,
**characterized in that** a front vehicle part (12) is connected for swiveling to the rear vehicle part (14), wherein at the front vehicle part (12) a soil processing roller (16) can be rotated about a roller rotation axis extending substantially in the transverse machine direction (Q).

## Revendications

1. Une machine pour traiter le sol, en particulier un compacteur du sol, comprenant:
- une partie arrière du véhicule (14) avec un moteur à combustion (26),
- des deux côtés du moteur à combustion (26) respectivement au moins une roue motrice (20),
- une cabine du conducteur (22) arrangée de manière décalée en relation au moteur à combustion (26) dans un sens longitudinal de la machine (L),
- un réservoir de carburant (28) pour du combustible à fournir au moteur à combustion (26),
- un réservoir de matériau supplémentaire (30),
- un réservoir de fluide hydraulique (32),
où le réservoir de matériau supplémentaire (30) est arrangé à la suite d'une roue motrice (20) dans le sens longitudinal de la machine (L) et essentiellement à côté de la roue motrice (20) dans un sens transversal de la machine (Q),
**caractérisée en ce que** le réservoir de matériau supplémentaire (30) est arrangé entre la roue motrice (20) et le réservoir de fluide hydraulique (32) dans le sens longitudinal de la machine (L), et **en ce qu'**une ouverture d'insertion (40) du réservoir de matériau supplémentaire (30) et une ouverture d'insertion (38) du réservoir de carburant (28) et une ouverture d'insertion du réservoir de fluide hydraulique (32) sont arrangées sur le même côté (36) de la partie arrière du véhicule (14).

2. Machine pour traiter le sol selon la revendication 1,
**caractérisée en ce que** le réservoir de matériau supplémentaire (30) est arrangé directement à la suite de la roue motrice (20) dans le sens longitudinal de la machine (L).

3. Machine pour traiter le sol selon une des revendication 1 ou 2,
**caractérisée en ce que** le réservoir de matériau supplémentaire (30) et le réservoir de fluide hydraulique sont arrangés essentiellement l'un à côté de l'autre dans un sens transversal de la machine (Q).

4. Machine pour traiter le sol selon une des revendication 1 à 3,
**caractérisée en ce que** le réservoir de matériau supplémentaire (30) ou/et le réservoir de fluide hydraulique (32) sont arrangés au moins en partie sous la cabine du conducteur (22).

5. Machine pour traiter le sol selon une des revendication 1 à 4,
**caractérisée en ce que** le réservoir de carburant (28) est arrangé après le moteur à combustion (26) dans le sens longitudinal de la machine (L) et dans une région centrale de la partie arrière du véhicule (14) dans le sens transversal de la machine (Q).

6. Machine pour traiter le sol selon une des revendication 1 à 5,
**caractérisée en ce que** le réservoir de matériau supplémentaire (30) et le réservoir de carburant (28) sont arrangés en se chevauchant au moins partiellement dans le sens longitudinal de la machine (L).

7. Machine pour traiter le sol selon une des revendication 1 à 6,
**caractérisée en ce qu'**un orifice de remplissage de carburant (34) du réservoir de carburant (28) s'étend au moins en partie entre le réservoir de matériau supplémentaire (30) et la roue motrice (20).

8. Machine pour traiter le sol selon une des revendication 1 à 7,
**caractérisée en ce qu'**un orifice de remplissage (40) du réservoir de matériau supplémentaire (30) et une orifice de remplissage (38) du réservoir de carburant (28) ou/et un orifice de remplissage du réservoir de fluide hydraulique (32) sont arrangés de manière essentiellement consécutive dans le sens longitudinal de la machine (L).

9. Machine pour traiter le sol selon une des revendication 1 à 8,
**caractérisée en ce qu'**une partie avant du véhicule (12) est liée de manière pivotante à la partie arrière du véhicule (14), où à la partie avant du véhicule (12) un rouleau de traitement du sol (16) est rotatif autour d'un axe de rotation du rouleau s'étendant essentiellement dans le sens transversal de la machine (Q).
